# EUROPEAN PATENT APPLICATION

(11) **EP 4 546 853 A1**
(43) Date of publication of application: **30.04.2025**
(21) Application number: 24208262.6
(22) Date of filing: 23.10.2024
(51) Int. Cl.: H04W 24/06, H04L 41/16

(54) **ACTIVE TESTING FOR AIR-INTERFACE-BASED ARTIFICIAL INTELLIGENCE OR MACHINE LEARNING MODELS**

(30) Priority: 27.10.2023 US 202318496390
(71) Applicant: Viavi Solutions Inc., Chandler, AZ 85286 (US)
(72) Inventor: HARRIS, Paul, Chandler, 85286 (US); THOMAS, Howard John, Stonehouse, GL10 3QQ (GB); YAMANY, Sameh, Chandler, 85286 (US); WONG, Ian, Austin, 78726 (US)
(74) Representative: Murgitroyd & Company

(57) **Abstract**

In some implementations, a testing system may obtain, from a wireless communication device, one or more output parameters associated with an embedded artificial intelligence or machine learning (AI/ML) model indicating information associated with one or more functions performed by the embedded AI/ML model, wherein the one or more functions are associated with an air interface. The testing system may perform, via a test model of the testing system, one or more test operations using the one or more output parameters, wherein the test model is a reference model for the one or more test operations. The testing system may determine, using the one or more test operations, one or more performance parameters indicating a performance level of the embedded AI/ML model. The testing system may perform, based on the one or more performance parameters, one or more actions.

## Description

### BACKGROUND

Artificial intelligence includes a broad range of technologies and approaches that enable machines to mimic human intelligence and cognitive processes. Examples of artificial intelligence techniques include machine learning, rule-based systems, expert systems, and/or neural networks, among other examples. Machine learning involves computers learning from data to perform tasks. Machine learning algorithms are used to train machine learning models based on sample data, known as "training data." Once trained, machine learning models may be used to make predictions, decisions, or classifications relating to new observations.

In some examples, one or more devices in a wireless network may utilize artificial intelligence and/or machine learning (AI/ML) models to improve the performance of the device(s) and/or the wireless network. For example, principles or algorithms for radio access network (RAN) intelligence enabled by AI/ML and the associated functional framework have been utilized or studied to identify the benefits of AI-enabled RAN through possible use cases, such as compression (e.g., channel state information (CSI) compression or beam weight compression), beam management (e.g., beam weight determination, uplink and downlink beam matching, and/or beam recovery), energy saving, load balancing, mobility management, and/or coverage optimization, among other examples.

### SUMMARY

In some implementations, a testing system includes a test model that includes a first embedded artificial intelligence or machine learning (AI/ML) model that is trained to evaluate performance of other embedded AI/ML models in connection with one or more network events; and a testing component, configured to: obtain, from a wireless communication device, one or more output parameters associated with a second embedded AI/ML model indicating information associated with one or more functions performed by the second embedded AI/ML model, wherein the second embedded AI/ML model is embedded at the wireless communication device, and wherein the one or more functions are associated with an air interface over which the wireless communication device is configured to communicate; perform, via the test model, one or more test operations using the one or more output parameters, wherein the first embedded AI/ML model is a reference model for the one or more test operations; determine, based on the one or more test operations, one or more performance parameters indicating a performance level of the second embedded AI/ML model; and perform, based on the one or more performance parameters, one or more actions.

In some implementations, a method for active testing for air-interface-based embedded AI/ML models includes obtaining, by a testing system and from a wireless communication device, one or more output parameters associated with an embedded AI/ML model indicating information associated with one or more functions performed by the embedded AI/ML model, wherein the embedded AI/ML model is embedded at the wireless communication device, and wherein the one or more functions are associated with an air interface over which the wireless communication device is configured to communicate; performing, by the testing system and via a test model of the testing system, one or more test operations using the one or more output parameters, wherein the test model is a reference model for the one or more test operations; determining, by the testing system and using the one or more test operations, one or more performance parameters indicating a performance level of the embedded AI/ML, model; and performing, by the testing system and based on the one or more performance parameters, one or more actions.

In some implementations, a testing device includes one or more processors configured to: obtain, from a wireless communication device, one or more output parameters associated with an embedded AI/ML model indicating information associated with one or more functions performed by the embedded AI/ML model, wherein the embedded AI/ML model is embedded at the wireless communication device, and wherein the one or more functions are associated with an air interface over which the wireless communication device is configured to communicate; perform, via a test model embedded at the testing device, one or more test operations using the one or more output parameters, wherein the test model is a ground truth model for the one or more test operations; determine, using the one or more test operations, one or more performance parameters indicating a performance level of the embedded AI/ML model; and perform, based on the one or more performance parameters, one or more actions.

### BRIEF DESCRIPTION OF THE DRAWINGS

Figs. 1A-1B are diagrams of an example implementation associated with active testing for air-interface-based AI/ML models.
Fig. 2 is a diagram of an example implementation associated with active testing for air-interface-based AI/ML models.
Fig. 3 is a diagram of an example environment in which systems and/or methods described herein may be implemented.
Fig. 4 is a diagram of example components of a device associated with active testing for air-interface-based AI/ML models.
Fig. 5 is a flowchart of an example process associated with active testing for air-interface-based AI/ML models.

### DETAILED DESCRIPTION

The following detailed description of example implementations refers to the accompanying drawings. The same reference numbers in different drawings may identify the same or similar elements.

AI/ML may be utilized to optimize the performance of an air interface (e.g., an over-the-air (OTA) interface). For example, a wireless network (e.g., a RAN, such as a 4G network, a 5G network, a 6G network, a personal area network, a private network, a vehicle-based network, or another type of wireless network) may include one or more wireless communication devices having an AI/ML model deployed at or by the one or more devices. The AI/ML model may be associated with the air interface. For example, the AI/ML model may be associated with the air interface in that the AI/ML model may be trained to perform one or more operations that utilize the air interface, such as compression (e.g., CSI compression), beam management (e.g., beam prediction or beam blockage prediction), energy saving, load balancing, mobility management, and/or coverage optimization, among other examples.

In some examples, a wireless communication device (e.g., a base station, a user equipment (UE), a user device, or another wireless communication device) may include an embedded AI/ML model. "Embedded AI/ML model" refers to an AI/ML model that is integrated into a larger software and/or hardware system (e.g., rather than being run as a standalone application). The integration may enable the AI/ML model to perform specific tasks or provide intelligent functionality within the context of the larger system, such as tasks or functionality associated with the air interface. An embedded AI/ML model may continuously learn and/or evolve during deployment, rendering evaluation of inferences or outputs provided by the embedded AI/ML model difficult (e.g., because it may be difficult to determine how or why the embedded AI/ML model makes a particular decision). In some examples, the AI/ML model may be a one-sided model (e.g., where the AI/ML model is deployed at or by a single wireless communication device) or a two-sided model (e.g., where the AI/ML model includes multiple components that are deployed at or by respective (e.g., different) wireless communication devices).

Network and/or system testing solutions play a vital role in the development and implementation of new technologies. For example, testing solutions for AI/ML models that are associated with the air interface may ensure that the AI/ML models perform effectively and meet the desired service levels for the air interface. In some examples, an AI/ML model may be tested in a testing environment (e.g., a lab environment). This may ensure that the AI/ML model is properly trained and/or configured to perform effectively and meet the desired service levels.

However, after a wireless communication device having an embedded AI/ML model (e.g., associated with the air interface) is deployed, it may be difficult to perform testing and provide assurance that the AI/ML model is continuing to perform properly. For example, different wireless networks may have different network topologies. The different network topologies may introduce challenges for testing an AI/ML model that is configured to perform operations via the air interface of the wireless network (e.g., as a wireless communication device operates in different networks having different network topologies). As another example, radio conditions and service types of the air interface may change frequently. In a testing environment, it may be possible to test the AI/ML model under different radio conditions and service types and/or mobility patterns. However, providing service assurance with varying radio conditions and service types may be difficult because a reference for testing (e.g., that is generalized for multiple and/or varying conditions, service types, or mobility patterns) under the varying radio conditions and service types may not be defined. For example, AI/ML models for the air interface may be data driven models (e.g., using data collected via the air interface), rendering the prediction and/or evaluation of the performance of the AI/ML models difficult.

Additionally, a RAN may include wireless communication devices that are provided or managed by different vendors. For example, wireless communication devices designed, marketed, and/or maintained by different vendors may implement different AI/ML models for performing similar, or the same, functions. For example, some vendors may define and/or provide a reference AI/ML model (e.g., a benchmark or single source of reference) for testing and/or verification, whereas other vendors may not define and/or provide the reference AI/ML model. In some examples, training of the AI/ML model may occur at a single wireless communication device or across multiple wireless communication devices. Ensuring interoperability for testing of embedded AI/ML models in networks having different wireless communication devices that are associated with different vendors may increase the complexity associated with performing testing of the embedded AI/ML models (e.g., because of the interactions with different vendor models). Further, embedded AI/ML models may be associated with continuous integration and continuous development (CI/CD) processes after deployment, resulting in changes in the AI/ML models over time. Validating performance of embedded AI/ML models in the context of CI/CD processes may be difficult because a standard or reference for the performance of the embedded AI/ML model may not be defined.

As a result, it may be difficult to perform testing and provide assurance that an AI/ML model is continuing to perform properly after deployment. This may result in embedded AI/ML models performing poorly in a wireless communication device (e.g., without the poor performance being detected). The poor performance of the AI/ML model may degrade one or more operations of the wireless communication device, and/or consume resources (e.g., processing resources, network resources, and/or power resources) associated with performing one or more operations via a poorly performing embedded AI/ML model, among other examples. Additionally, the difficulty in performing testing for embedded AI/ML models after deployment may result in increased difficulty in identifying issues caused by poor performance of the embedded AI/ML models as compared to poor performance caused by another issue, such as cell outages, traffic dynamics, equipment (e.g., hardware) failures, or other issues.

Some implementations described herein enable a testing system of embedded AI/ML models for an air interface. In some implementations, the testing system may enable active testing of the embedded AI/ML models for the air interface (e.g., where the AI/ML models are embedded in deployed wireless communication devices). In some implementations, the testing system may include a test model that defines a benchmark (e.g., a single source reference or standard) for the embedded AI/ML models for the air interface. For example, the test model may include an embedded AI/ML model that is embedded in a testing device and/or the testing system. The test model may be trained separately from the embedded AI/ML models for the air interface. For example, the test model may be trained using collected network data (e.g., associated with a wide variety of network events) to enable the test model to evaluate, stimulate, correlate, and/or otherwise test various functions of embedded AI/ML models for the air interface.

For example, the testing system may obtain, from a wireless communication device, one or more output parameters associated with an embedded AI/ML model indicating information associated with one or more functions performed by the embedded AI/ML model at the wireless communication device (e.g., the embedded AI/ML model may be embedded at the wireless communication device). For example, the wireless communication device may be deployed in a wireless network. The one or more functions may be performed by the wireless communication device via an air interface (e.g., with one or more other wireless communication devices). The testing system may perform, via the test model, one or more test operations using the one or more output parameters. For example, the one or more test operations may include one or more active test operations for the embedded AI/ML model. For example, an output of the test model (e.g., of the embedded AI/ML model at the testing system) may be indicative of a performance level of the embedded AI/ML model at the wireless communication device.

For example, the testing system may determine, based on the one or more test operations, one or more performance parameters indicating a performance level of the embedded AI/ML model. The testing system may perform, based on the one or more performance parameters, one or more actions. For example, the one or more actions may include transmitting an indication of the one or more performance parameters to a network operator device (e.g., a core network device or a network operator server device). Additionally, or alternatively, the one or more actions may include causing a modification of the embedded AI/ML model at the wireless communication device to be performed. For example, the testing system may cause the embedded AI/ML model to be switched to a different AI/ML model. As another example, the testing system may cause an operation mode of the embedded AI/ML model to be switched to a different operation mode.

As a result, the testing system may be enabled to ensure that embedded AI/ML models for an air interface in deployed wireless communication devices are continuing to perform properly (e.g., the embedded AI/ML models are performing effectively and are meeting the desired service levels for the air interface). Therefore, the testing system may be enabled to provide assurance of the performance of the embedded AI/ML models for the air interface in deployed wireless communication devices. This may ensure that embedded AI/ML models perform as expected in a deployed wireless communication device in various network topologies, when experiencing different radio conditions, and/or in response to different network events, among other examples. The provided service assurance may enable reliable use of the AI/ML models, thereby enabling improved or enhanced operations of the wireless communication device (e.g., via one or more functions performed by the embedded AI/ML models). Additionally, this may conserve resources (e.g., processing resources, network resources, and/or power resources) that would have otherwise been associated with the wireless communication device performing one or more operations via a poorly performing embedded AI/ML model.

Further, by enabling the testing system to perform active testing of the embedded AI/ML models, the testing system may be enabled to proactively detect and/or predict problems with embedded AI/ML models in deployed wireless communication devices. This may conserve resources (e.g., processing resources, network resources, and/or power resources) that would have otherwise been associated with the wireless communication device operating using an AI/ML model experiencing a problem, the testing system detecting the problem after it has impacted the performance of the wireless communication device, and/or retroactively performing one or more operations to remedy the problem, among other examples. By enabling the testing system to cause a modification of the embedded AI/ML model at the wireless communication device to be performed, the testing system may improve the performance of the embedded AI/ML model. For example, this may enable the embedded AI/ML model to be quickly modified or switched in response to detected poor performance, thereby enabling the wireless communication device to use a better performing AI/ML model or operation mode (e.g., for current network conditions experienced by the wireless communication device).

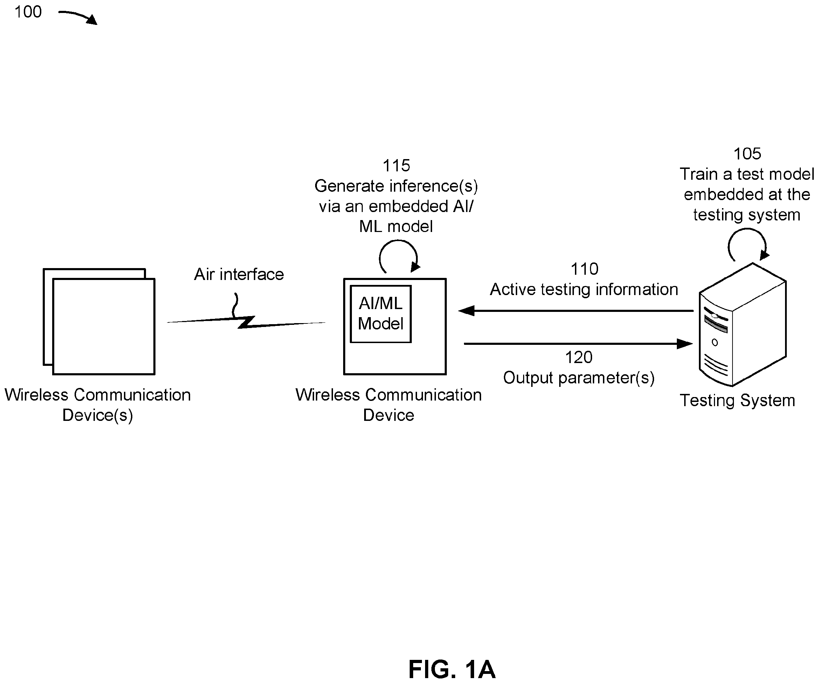

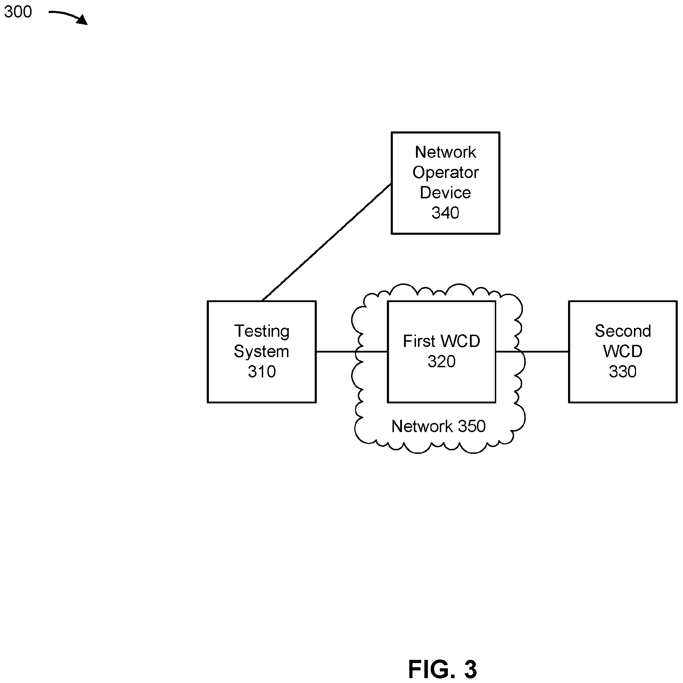

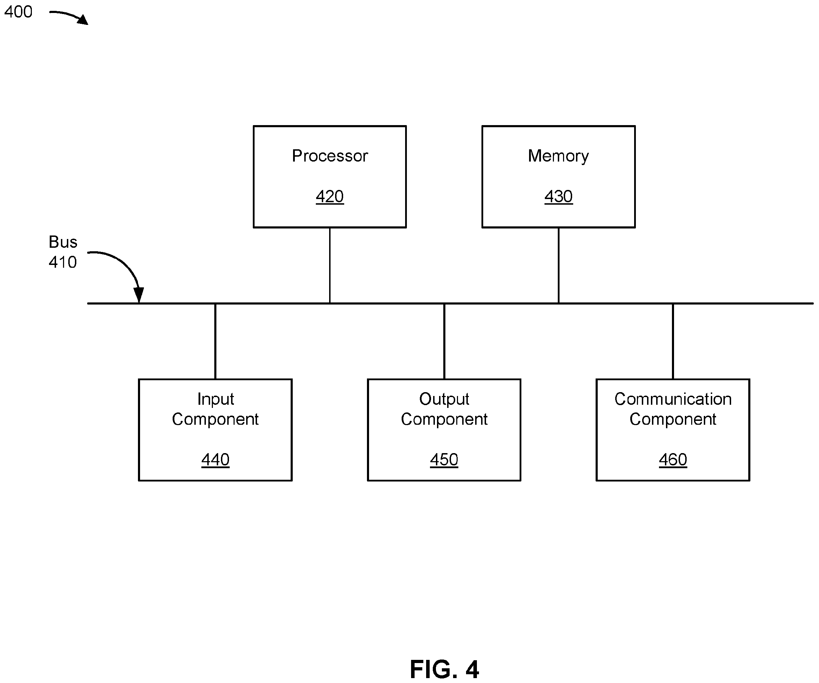

Figs. 1A-1B are diagrams of an example implementation 100 associated with active testing for air-interface-based AI/ML models. As shown in Figs. 1A-1B, example implementation 100 includes a testing system, one or more wireless communication devices, and a network operator device. These devices are described in more detail below in connection with Fig. 3 and Fig. 4.

The one or more wireless communication devices may include a base station (e.g., a gNB), a core network device, a UE, a radiotelephone, a smart phone, a laptop computer, a tablet, and/or another type of wireless communication device. As shown in Fig. 1A, the one or more wireless communication devices may be configured to communicate via an air interface (e.g., an over-the-air interface). For example, the one or more wireless communication devices may communicate via a wireless link. The one or more wireless communication devices may be configured to communicate via one or more radio access technologies, such as Long Term Evolution (LTE), a 4G RAT, New Radio (NR), a 5G RAT, and/or another radio access technology. For example, the one or more wireless communication devices may be included in a RAN or another wireless network.

As shown in Fig. 1A, a wireless communication device may include an embedded AI/ML model (e.g., an AI/ML model embedded at the wireless communication device). The AI/ML model may be an AI/ML model for the air interface. For example, the ML model may be associated with the air interface (e.g., may be configured and/or trained to perform one or more operations for the air interface or using the air interface). For example, the embedded AI/ML model may be configured and/or trained to perform one or more functions. The one or more functions may be associated with the air interface over which the wireless communication device is configured to communicate. For example, the one or more functions may be associated with the air interface in that the one or more functions may use (or may be associated with communications or operations that use) the air interface.

For example, the one or more functions may include one or more channel state information (CSI) enhancement functions (e.g., artificial intelligence (AI)-CSI functions), such as CSI compression (e.g., frequency domain compression) and/or CSI prediction (e.g., time domain prediction of future CSI), among other examples. Additionally, or alternatively, the one or more functions may include beam management functions (e.g., using AI/ML techniques to predict the best beam to use for a given wireless communication device at a given time and/or place), such as spatial domain predictions of beams, and/or time domain predictions of beams, among other examples. Additionally, or alternatively, the one or more functions may include one or more positioning functions, such as direct AI/ML positioning (e.g., fingerprinting), and/or AI/ML-assisted positioning (e.g., where the output of the AI/ML model inference is a new measurement and/or an enhancement of an existing measurement), among other examples. Additionally, or alternatively, the one or more functions may include one or more network energy saving operations, one or more load balancing operations, and/or one or more mobility optimization operations, among other examples. The described functions are provided as examples and the embedded AI/ML model may be configured and/or trained to perform other operations using the air interface. For example, the techniques, principles, procedures, and methods described herein may be applicable to any function performed by an AI/ML model for the air interface.

In some implementations, a RAN in which the wireless communication device is configured to communicate may support a function framework for AI/ML techniques supported by data collection (e.g., via the air interface). For example, the wireless communication device may be configured to run the AI/ML model based on inference data provided by one or more data sources (such as other wireless communication devices, as shown in Fig. 1A). The AI/ML model may be configured to produce an output (e.g., a prediction or an inference) with the inference data input to the wireless communication device. As described elsewhere herein, the wireless communication device may be an element or an entity of a core network or a RAN. For example, the wireless communication device may be a UE, a network node, a base station (e.g., a gNB), a central unit (CU), a distributed unit (DU), and/or a radio unit (RU), among other examples. The wireless communication device may host the AI/ML model (e.g., may host a model inference host of the AI/ML model). In other words, the AI/ML model may be embedded at the wireless communication device.

In some implementations, the AI/ML model may be embedded solely at the wireless communication device (e.g., may contained solely within a user terminal or a base station). In other implementations, a first portion (or component) of the AI/ML model may be embedded at the wireless communication device and a second portion (or component) of the AI/ML model may be embedded at another wireless communication device (e.g., the AI/ML model may be contained in part at a user terminal and in part at a base station). For example, the AI/ML model may include an encoder (e.g., for compressing information, such as CSI) and a decoder (e.g., for decompressing the information). The encoder may be embedded at a first wireless communication device and the decoder may be embedded at a second wireless communication device. For example, a UE may perform feature extraction and/or dimension reduction using the encoder (e.g., to compress CSI) and a base station would use the decoder to reconstruct the original CSI. The AI/ML-based CSI compression may reduce the size of transmitted CSI (e.g., transmitted via the air interface), thereby conserving network resources associated with reporting CSI.

In some implementations, the wireless communication devices may be configured to collaborate on the use and/or training of the AI/ML model using signaling via the air interface. For example, the AI/ML model may be implemented at a UE, at a base station, or in both locations. Additionally, the training of the AI/ML model may be accomplished centrally (e.g., at a single wireless communication device) or in a distributed manner (e.g., at multiple wireless communication devices). Different use cases for the AI/ML model may be associated with varying degrees of collaboration between wireless communication devices (e.g., between a UE and a base station). In some implementations, the AI/ML model may be associated with no collaboration (e.g., where the AI/ML operations are grounded in proprietary implementations). In other examples, the AI/ML model may be associated with signaling-based collaboration. In some implementations, the wireless communication devices support model transfer capabilities. "Model transfer" refers to the transfer of an AI/ML model over the air interface. For example, the AI/ML model may be associated with signaling-based collaboration with model transfer capabilities (e.g., the AI/ML operations may encompass the integration of new signaling and may leverage advanced model transfer capabilities). In other implementations, the AI/ML model may be associated with signaling-based collaboration without model transfer capabilities (e.g., where the AI/ML operations integrate dedicated standards enhancements to facilitate the collaboration process without involving model transfer).

As shown in Fig. 1A, and by reference number 105, the testing system may train a test model embedded at the testing system. The test model may be a benchmark model or a reference model that is configured to serve as a single source of reference for testing and/or validating AI/ML models for the air interface. For example, the test model may be, or may include, an embedded AI/ML model (e.g., that is trained separately from the AI/ML models for the air interface). In some implementations, the testing system may train the test model. In other implementations, another device or system (not shown in Fig. 1A) may train the test model. In such examples, the testing system may obtain and/or be configured with the trained test model.

The test model may be a benchmark model and/or a reference model (e.g., a single reference source) for AI/ML models for the air interface that are embedded in deployed wireless communication devices. In some implementations, the test model may be trained using one or more vendor reference models. For example, a vendor may configure and/or provide a reference model for testing and/or verification of AI/ML models designed and/or provided by the vendor. The test model may be trained using multiple reference models for respective vendors (e.g., to enable interoperability testing and/or verification for AI/ML models associated with different vendors). Additionally, the test model may be trained using collected network event data. For example, the test model may be trained using data collected from different network scenarios, such as different network topologies, different radio conditions, different operating conditions (e.g., line of sight (LOS) vs. non-LOS scenarios, or indoor vs. outdoor scenarios), different channel conditions, user (e.g. UE) density, and/or user (e.g., UE) geographic distribution, among other examples. For example, the test model may be trained using field data that is collected under various network scenarios. In some implementations, the test model may be trained to evaluate (e.g., test and/or verify) AI/ML models for one or more functions or use cases.

In some implementations, the testing system may obtain the field data via one or more probes or sensors in the network. In some implementations, the testing system may obtain one or more types or categories of field data. The type(s) or categories of field data may be based on an AI/ML function being tested or evaluated by the testing system. For example, the testing system may select the data to be collected and/or used for training the test model based on an AI/ML function being tested or evaluated by the testing system. Additionally, or alternatively, the testing system may select the data to be collected and/or used for training the test model based on one or more radio conditions or channel scenarios that are associated with challenges for embedded AI/ML models. This may reduce a complexity of training the test model because the field data may be tailored to the specific functions or scenarios that are being evaluated and/or that have an impact on the performance of the embedded AI/ML models for the air interface.

For example, the field data may enable the test model to determine one or more performance parameters indicating a performance level of an AI/ML model for the air interface in a certain network scenario. For example, the field data may enable the test model to determine the performance level of the AI/ML model that is reflective of the network scenario (e.g., the "real-world" scenario) that a wireless communication device is currently experiencing. In other words, the field data may enable the test model to determine the performance level of the AI/ML model for different network topologies, for different types or levels of collaboration between wireless communication devices, and/or for AI/ML models associated with different vendors, among other examples. For example, the test model may be trained to determine the appropriate metrics (e.g., one or more performance parameters) by which to evaluate the performance of the embedded AI/ML model using the network scenario in which the wireless communication device (e.g., the wireless communication device at which the AI/ML model is at least partially embedded) is currently operating. For example, the test model may be trained to use different performance parameters with which to evaluate the performance of the embedded AI/ML model in different network scenarios. This may reduce the complexity associated with testing and/or evaluating AI/ML models for the air interface that are embedded in deployed wireless communication devices (e.g., by enabling the test model to serve as the single reference point for testing and/or verification under various network scenarios).

For example, the testing system and/or the test model may be configured to evaluate and/or validate the accuracy and performance of wireless communication devices with embedded AI/ML models comprising the air interface. For example, the test model may be trained to facilitate (e.g., stimulate, activate, and/or correlate) one or more functions of the AI/ML model associated with the air interface by simulating one or more network events (e.g., generating, recreating, or replaying one or more network events using real network data). In other words, the testing system and/or the test model may be configured to stimulate, activate, and/or correlate, among other examples, the functions and performance of embedded AI/ML models with live network events. The testing system and/or the test model may be configured to use the resulting output (e.g., of the test model) to aid the switching and loading of new AI/ML models to improve accuracy and performance of operations performed by the wireless communication device (e.g., operations that use AI/ML techniques).

In some implementations, the testing system and/or the test model may use the field data and/or data obtained from one or more wireless communication devices may configure a digital twin (e.g., of the embedded AI/ML model for the air interface) for scenario emulation. For example, the testing system and/or the test model may be configured to evaluate the performance of different AI/ML models under lab-based tests or to facilitate offline or online model training (e.g., using the configured digital twin or emulation of the AI/ML model for the air interface). In some implementations, the testing system and/or the test model may use data output from the test model to configure the digital twin (e.g., of the embedded AI/ML model for the air interface), where the digital twin is configured to serve as a reference model for the embedded AI/ML model. This may enable the testing system to perform lab-based tests of the AI/ML model in a field scenario (e.g., where the wireless communication device is deployed in a wireless network). Additionally, the digital twin of the embedded AI/ML model may enable more accurate lab testing of the embedded AI/ML model because the digital twin may function in a similar manner as the embedded AI/ML model does in the field (e.g., enabling the testing system to evaluate a field performance of the embedded AI/ML model in a lab scenario). Additionally, the testing system and/or the test model may use data output from the test model for retraining of the embedded AI/ML model.

In some implementations, the testing system may perform one or more active test operations for the embedded AI/ML model. Active testing may involve the testing system selecting and/or obtaining data points for testing or evaluation (e.g., in contrast to passive testing where the data points may be randomly or statically selected). For example, active testing may cause test data (e.g., with known characteristics) to be injected into a system (e.g., the testing system) for testing an AI/ML model. For example, the testing system may efficiently improve and assess the performance of the embedded AI/ML model by focusing on the most informative or critical data points for evaluation. For example, as shown by reference number 110, the testing system may transmit, and the wireless communication device (e.g., a device under test) may receive, active testing information. The active testing information may cause the wireless communication device to generate and/or provide output data from the AI/MI, model that is relevant for a particular testing scenario.

For example, the testing system may transmit, and the wireless communication device may receive, test data for one or more active testing scenarios. The test data may indicate one or more operations to be performed by the wireless communication device via the embedded AI/ML model. The reception of the test data may cause the wireless communication device to perform the one or more operations (e.g., via the embedded AI/MI, model). In other words, the test data may stimulate the wireless communication device and/or the embedded AI/ML model to perform operation(s) associated with testing, evaluating, and/or validating a given active testing scenario. The active test data may be based on collected field data. For example, the testing system may generate active test data to test the embedded AI/MI, models for scenarios that may be particularly challenging or problematic for the performance of the embedded AI/MI, model (e.g., to proactively identify any issues or problems with the embedded AI/MI, model). In some implementations, the reception of the test data may cause the wireless communication device to perform the one or more operations with another wireless communication device (e.g., via the air interface). For example, the embedded AI/NΠ, model may be a two-sided model that is associated with signaling between two wireless communication devices.

As shown by reference number 115, the wireless communication device may generate one or more inferences (e.g., predications) via the embedded AI/ML model. For example, the wireless communication device may perform one or more functions (e.g., via the embedded AI/ML model) that involve the air interface. As an example, the one or more functions may include a CSI compression function, a beam management function, an energy saving function, a load balancing function, a mobility management function, and/or a coverage optimization function, among other examples.

The wireless communication device may generate one or more output parameters using an output (e.g., inference) that is generated by the AI/MI, model. The one or more output parameters may include metrics for performance monitoring of the embedded AI/ML model. In some implementations, the one or more output parameters may be generated using a current network scenario experienced by the wireless communication device. For example, the testing system may indicate, and/or the wireless communication device may be configured to generate, certain output parameters for respective network scenarios.

The one or more output parameters may include one or more parameters indicative of the output (e.g., inference) that is generated by the AI/ML model. Additionally, or alternatively, the one or more output parameters may indicate the network scenario under which the output was generated, such as a network topology, radio conditions (e.g., LOS or non-LOS, or other radio conditions), one or more communication channel parameters (e.g., reference signal received power (RSRP) or signal-to-noise ratio (SNR)), and/or information associated with the air interface (e.g., an indication of a type or configuration of other wireless communication device(s) via which the wireless communication device is communicating over the air interface), among other examples. In some implementations, the one or more output parameters may indicate the data used by the wireless communication device (e.g., used by the AI/ML model) to generate the output (e.g., inference).

In some implementations, the wireless communication device may be configured to generate the output data using different AI/ML models (e.g., different versions of the AI/ML model) and/or using different operation modes of the AI/ML model. For example, the different AI/ML models (e.g., different versions of the AI/ML model) and/or the different operation modes may cause the AI/ML model to operate differently. The different AI/ML models and/or the different operation modes may be defined, or otherwise fixed, by a wireless communication standard, such as the Third Generation Partnership Project (3GPP).

As an example, if a function of the AI/ML model includes CSI compression, then the different AI/ML models (e.g., different versions of the AI/ML model) and/or the different operation modes may be associated with different effective degrees of information compression. In some implementations, the wireless communication device may be configured to periodically change (e.g., switch) which AI/ML model and/or which operation mode is used by the wireless communication device. Additionally, or alternatively, the wireless communication device may be configured to sporadically or aperiodically change which AI/ML model and/or which operation mode is used by the wireless communication device.

Additionally, or alternatively, the wireless communication device may be configured to change which AI/ML model and/or which operation mode is used by the wireless communication device based on a detected trigger event. For example, the trigger event may be associated with one or more parameters, such as a key performance indicator (KPI) that is based on a function or use case of the AI/ML model. For example, if the wireless communication device determines that the KPI satisfies a threshold, then the wireless communication device may detect the trigger event (e.g., and change which AI/ML model and/or which operation mode is used by the wireless communication). The changing of the AI/ML model and/or operation mode may enable the testing system to obtain output parameters for different models and/or different operation modes in different network scenarios. This may improve the testing and/or verification of the wireless communication device by enabling the testing system to compare the performance of different models and/or different operation modes. For example, the switching of the AI/ML model and/or operation mode may create an outer control loop that can be indicative of the overall performance of the AI/ML system (e.g., by enabling the testing system to obtain metrics for evaluation for different models and/or different operation modes and under different network scenarios over time).

In some implementations, the different operation modes may include a main operation mode and one or more alternate operation modes. "Main operation mode" refers to a default operation mode for the AI/ML model. "Alternate operation mode" refers to a fallback or secondary operation mode for the AI/ML model. For example, the wireless communication device may be configured to use an alternate operation mode if the use of the main operation mode is resulting in poor performance of the AI/ML model (e.g., poor performance of a function associated with the AI/ML model). For example, the testing system may be configured to cause the wireless communication device to switch between one or more alternate operation modes when applying AI/ML-based CSI (AI-CSI) compression, where each mode has a different effective degree of information compression appropriate for meeting the required levels of performance in different network scenarios. For example, the testing system may be configured to cause the wireless communication device to modify a compression level of a CSI compression model (e.g., where the embedded AI/ML model is an encoder or decoder for CSI compression). In some implementations, switching between different operation modes may be periodic, sporadic, and/or triggered by a condition related to a parameter of the CSI or other KPI.

For example, because the network scenario experienced by the wireless communication device may change over time, the performance and/or operation of the AI/ML model may also change over time. In other words, the function(s) of the AI/ML model may be non-linear and may be time-varying. Therefore, enabling the testing system to obtain metrics for evaluation of different models and/or different operation modes over time may improve the evaluation and/or validation of the AI/ML function(s) performed by the wireless communication device.

As shown by reference number 120, the wireless communication device may transmit or provide, and the testing system may receive or obtain, the one or more output parameters. For example, the testing system may obtain, from the wireless communication device, the one or more output parameters associated with the embedded AI/ML model indicating information associated with one or more functions performed by the embedded AI/ML model. In some implementations, the wireless communication device may periodically transmit the one or more output parameters (e.g., in accordance with a defined or configured periodic schedule).

Additionally, or alternatively, the wireless communication device may transmit, and the testing system may receive, the one or more output parameters aperiodically. For example, the wireless communication device may transmit, and the testing system may receive, the one or more output parameters in response to a communication or request from the testing system. For example, the wireless communication device may transmit, and the testing system may receive, the one or more output parameters in response to the active testing information.

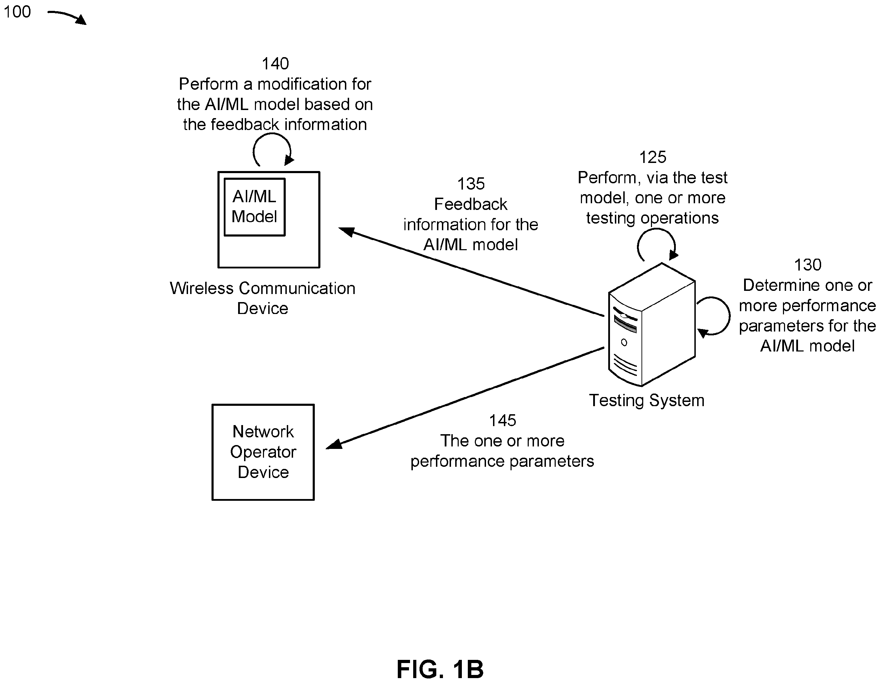

As shown in Fig. 1B, and by reference number 125, the testing system may perform, via the test model, one or more test operations. In some implementations, the one or more test operations may be defined, or otherwise fixed, by a wireless communication standard, such as the 3GPP. For example, the testing system may perform, via the test model, one or more test operations using the one or more output parameters (e.g., where the AI/ML model embedded in the testing system is a reference model for the one or more test operations). For example, the testing system may use the test model as a benchmark model or reference model (e.g., a single reference source) for evaluating and/or validating the function(s) performed by the wireless communication device via the AI/ML model.

In some implementations, the testing system may determine one or more evaluation metrics to be used to evaluate the AI/ML model. For example, the testing system may determine the one or more evaluation metrics based on the output parameter(s) indicated by the wireless communication device. For example, the testing system may determine the one or more evaluation metrics based on a network scenario in which the wireless communication device is operating. Additionally, or alternatively, the testing system may determine the one or more evaluation metrics based on a function performed by the wireless communication device via the AI/ML model. As an example, the one or more evaluation metrics may include one or more classification metrics (e.g., an accuracy metric, a precision metric, a recall metric, and/or an F1 score), one or more regression metrics (e.g., a mean squared error (MSE) metric, and/or a receiver operating characteristic (ROC) curve), one or more ranking metrics (e.g., a mean reciprocal rank (MRR) metric, and/or a discounted cumulative gain (DCG) metric), and/or one or more statistical metrics (e.g., a correlation metric), among other examples. In some implementations, the one or more evaluation metrics may include a robustness metric that indicates testing results in rapidly changing conditions, an efficiency metric (e.g., with respect to a bandwidth consumed for control signaling by one or more wireless communication devices), a throughput metric (e.g., of data transmissions), and/or a latency metric (e.g., of data transmissions), among other examples.

In some implementations, the testing system may generate, using the one or more output parameters, evaluation data for one or more active testing scenarios. For example, the testing system may use the information output by the embedded AI/ML model at the wireless communication device to generate data to be used as an input to the test model (e.g., where the output of the test model indicates an expected behavior of the embedded AI/ML model under the network scenario experienced by the wireless communication device). In some implementations, the evaluation data may be similar to the test data provided to the wireless communication device (e.g., as described in connection with reference number 115).

The testing system may provide, as an input to the test model, the evaluation data. The testing system may obtain, via an output of the test model, one or more reference parameters indicating an expected behavior in the one or more active testing scenarios. For example, the test model may be configured to output an expected behavior for AI/ML models under the network scenario experienced by the wireless communication device.

As another example, the one or more test operations may include checking and validating the accuracy and performance of one or more operations performed by wireless communication device via the embedded AI/ML model. For example, the testing system may stimulate, activate, and/or correlate the functions and performance of embedded AI/ML models with live network events. For example, the one or more output parameters may indicate one or more network events experienced by the wireless communication device at, or near, the time when the one or more operations are performed (e.g., by the wireless communication device) via the embedded AI/ML model. The test model may be configured to evaluate (e.g., using one or more metrics) the performance and/or accuracy of the one or more operations in connection with the one or more network events. As an example, a network event may include a network scenario, a network topology, one or more radio conditions, one or more channel parameters, a subscriber activity, a geographic distribution of wireless communication devices, and/or information associated with another wireless communication device via which the operation(s) are performed, among other examples.

As shown by reference number 130, the testing system may determine one or more performance parameters for the AI/ML model. The one or more performance parameters may indicate a performance level of the AI/ML model. In some implementations, the one or more performance parameters may indicate performance levels of respective operation modes and/or versions of the AI/ML model. In some implementations, the one or more performance parameters may indicate an accuracy of one or more operations performed via the embedded AI/ML model (e.g., an accuracy of predictions or inferences output by the embedded AI/ML model). Additionally, or alternatively, the one or more performance parameters may indicate a verification of a function of the embedded AI/ML model (e.g., may indicate whether the operation of the AI/ML model aligns with design specifications and that the AI/ML model behaves as intended). Additionally, or alternatively, the one or more performance parameters may indicate a performance of the wireless communication device, such as a throughput, data rate, power usage (e.g., energy usage), robustness, and/or another performance parameter of the wireless communication device.

In some implementations, the testing system may determine the one or more performance parameters based on a comparison of the one or more reference parameters (e.g., output by the test model) to the one or more output parameters. In other words, the testing system may compare an output of the test model to the output of the embedded AI/ML model. Because the test model is trained to be the benchmark model or a single reference source for embedded AI/ML models for the air interface, the output of the test model may be indicative of the expected behavior of the embedded AI/ML model in view of the network event(s) experienced by the wireless communication device.

In some implementations, the testing system may determine performance differences between operation modes and/or versions of the AI/ML model. For example, the testing system may determine performance differences between the main operation mode and respective alternate operation modes of the one or more alternate operation modes of the AI/ML model. Additionally, or alternatively, the testing system may determine performance differences between two or more AI/ML models used by the wireless communication device (e.g., to perform a given function).

In some implementations, the testing system may select an operation mode and/or an AI/ML model to be used by the wireless communication device using the one or more performance parameters. For example, the testing system may select an operation mode based on the performance differences between operation modes of the AI/ML model. As another example, the testing system may select a model to be used by the wireless communication device based on performance differences between two or more AI/ML models used by the wireless communication device.

As shown by reference number 135, the testing system may transmit, and the wireless communication device may receive, feedback information for the AI/ML model. The feedback information may indicate the performance level(s) of the embedded AI/ML model. In some implementations, the feedback information may indicate the one or more performance parameters of the AI/ML model.

In some implementations, the feedback information may indicate that the wireless communication device is to change which model is used by the wireless communication device. For example, the testing system may cause the wireless communication device to switch from the embedded AI/ML model to another embedded AI/ML model that is trained to perform the one or more functions (e.g., the same one or more functions that the embedded AI/ML model is trained to perform). The testing system may cause the wireless communication device to change the AI/ML model (e.g., switch to another model) based on the performance level not meeting one or more criteria and/or based on one or more performance parameters not satisfying a performance threshold. For example, if the evaluation and/or verification of the embedded AI/ML model indicates poor performance, then the testing system may be configured to cause the wireless communication device to switch from the AI/ML model to another AI/ML model. As another example, the testing system may cause the wireless communication device to switch from a first AI/ML model to a second AI/ML model based on relative performance levels indicating that the second AI/ML model is associated with better performance at the wireless communication device under the current network scenario.

In some implementations, the feedback information may indicate that the wireless communication device is to modify one or more parameters of the embedded AI/ML model. For example, the testing system may cause the wireless communication device to modify one or more parameters of the embedded AI/ML model. The one or more parameters of the embedded AI/ML model may include one or more hyperparameters. As another example, the one or more parameters of the embedded AI/ML model may include an operation mode. For example, as described elsewhere herein, the testing system may select an active operation mode from the plurality of operation modes using the one or more performance parameters indicating that the active operation mode is associated with a highest performance level. The testing system may transmit, and the wireless communication device may receive, an indication to use the active operation mode. As another example, the testing system may cause the wireless communication device to switch between the main operation mode and an alternate operation mode of the one or more alternate operation modes using the one or more performance parameters indicating that the performance level does not meet one or more criteria and/or the one or more performance parameters (e.g., of the main operation mode) not satisfying a performance threshold. As an example, the testing system may transmit, and the wireless communication device may receive, an indication to modify a compression level of a CSI compression model (e.g., where the AI/ML model is a CSI compression model).

In some implementations, the feedback information may indicate one or more radio conditions, radio propagation scenarios, a subscriber activity, a geographic distribution of wireless communication devices, and/or radio parameters to be associated with a given operation mode or a given AI/ML model. For example, the feedback information may indicate a "signature" that is indicative of a scenario that may be particularly good or problematic for performance of a given operation mode or a given AI/ML model. The signature may include one or more radio conditions and/or one or more radio parameters. The wireless communication device may be configured to switch to using (e.g., if the signature is associated with good performance) or switch from using (e.g., if the signature is associated with poor performance) a given operation mode or a given AI/ML mode based on detecting the signature (e.g., when monitoring channel conditions or radio conditions of the air interface). For example, the one or more test operations may indicate scenarios that are problematic (e.g., where a given operation mode or AI/ML model results in poor performance of the wireless communication device) and/or that are beneficial (e.g., where a given operation mode or AI/ML model results in good performance of the wireless communication device). The testing system may generate a signature that is indicative of the identified scenario(s). This may enable the wireless communication device to automatically switch between operation modes and/or AI/ML models in response to changing radio conditions of the air interface.

As shown by reference number 140, the wireless communication device may perform a modification of the embedded AI/ML model based on the feedback information. For example, the wireless communication device may switch from using a first AI/ML model to using a second AI/ML model. As another example, the wireless communication device may switch from a first operation mode (e.g., a main operation mode) to using a second operation mode (e.g., an alternate operation mode) of the AI/ML model. The modification of the embedded AI/ML model may improve the performance of the AI/ML model and/or the wireless communication device.

In some implementations, the wireless communication device may monitor the air interface to determine radio conditions and/or radio parameters of the air interface. The wireless communication device may detect or identify a signature that is associated with a given operation mode of the AI/ML model or associated with a given AI/ML model. The wireless communication device may switch from using, or switch to using, the given operation mode or the given AI/ML model based on, or in response to, detecting or identifying the signature.

In some implementations, the wireless communication device may transmit, to one or more other wireless communication devices (e.g., to other communication systems and/or to other devices in the same communication system), an indication of the signature. Additionally, or alternatively, the wireless communication device may transmit, to one or more other wireless communication devices, an indication of one or more operations (e.g., training the AI/ML model or switching the AI/ML model) performed in response to detecting the signature. As a result, learning related to one or more events may be exploited (e.g., shared and/or used) outside the specific areas in which the one or more events were captured.

In some implementations, the wireless communication device may switch between the main operation mode and the one or more alternate operation modes of the embedded AI/ML model (e.g., based on the feedback information and/or detected radio conditions). In some implementations, the one or more output parameters (e.g., as described in connection with reference number 120) may include an indication of a quantity of switches between different operation modes performed by the wireless communication device. The testing system may maintain a counter indicating a quantity of instances of the wireless communication device switching between the main operation mode and the one or more alternate operation modes. The quantity of instances may be included in the one or more performance parameters. For example, the performance, or performance difference, between the main operation mode and the one or more alternate modes may trigger a counter (e.g., a performance counter) which can be used for service analysis and assurance purposes. For example, a value of the counter may be indicative of the performance of the AI/ML model because frequent switches of operation modes may indicate poor performance of the main operation mode.

In some implementations, as shown by reference number 145, the testing system may transmit, and the network operator device may receive, an indication of the one or more performance parameters of the AI/ML model. For example, the one or more performance parameters may be signaled via a network communication interface (e.g., a standardized interface), such as a network management plane interface (e.g., even if the underlying AI/ML process is proprietary and/or opaque). In some implementations, the counter (e.g., a value of the counter) and/or the use of an alternate operation mode may be signaled via the network communication interface by the testing system. This may enable the network operator to obtain an indication of the performance level(s) of wireless communication devices having embedded AI/ML models that are operating in the network.

As indicated above, Figs. 1A-1B are provided as examples. Other examples may differ from what is described with regard to Figs. 1A-1B. The number and arrangement of devices shown in Figs. 1A-1B are provided as an example. In practice, there may be additional devices, fewer devices, different devices, or differently arranged devices than those shown in Figs. 1A-1B. Furthermore, two or more devices shown in Figs. 1A-1B may be implemented within a single device, or a single device shown in Figs. 1A-1B may be implemented as multiple, distributed devices. Additionally, or alternatively, a set of devices (e.g., one or more devices) shown in Figs. 1A-1B may perform one or more functions described as being performed by another set of devices shown in Figs. 1A-1B.

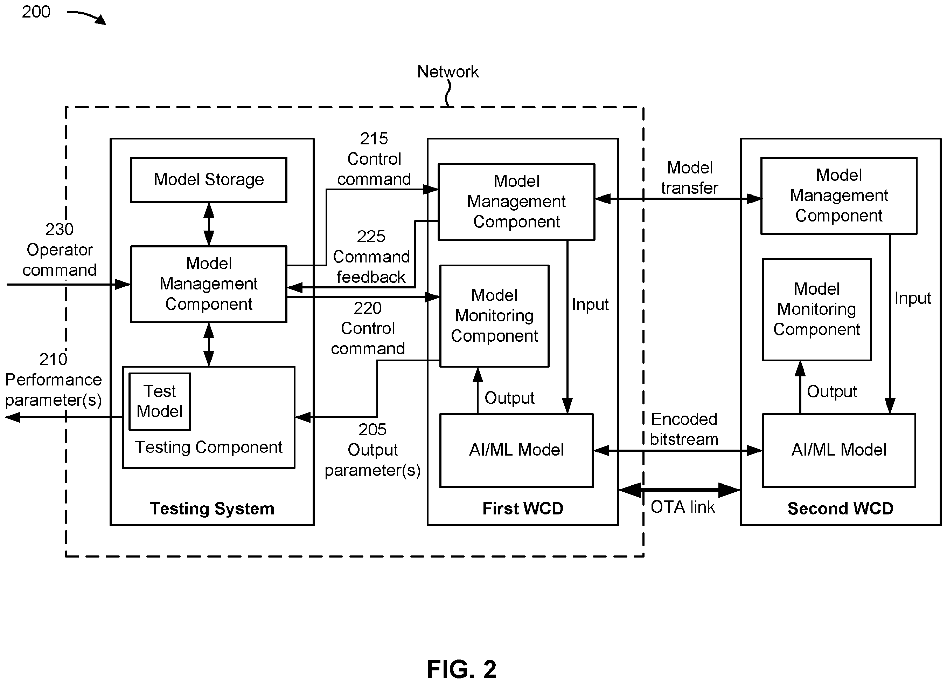

Fig. 2 is a diagram of an example implementation 200 associated with active testing for air-interface-based artificial intelligence or machine learning models. As shown in Fig. 2, example implementation 200 includes a testing system, a first wireless communication device (WCD), and a second wireless communication device. These devices are described in more detail below in connection with Fig. 3 and Fig. 4.

The first wireless communication device and the second wireless communication device may communicate via an air interface (e.g., shown in Fig. 2 as an over-the-air (OTA) link). For example, the first wireless communication device may be a base station and the second wireless communication device may be a UE (or user terminal). In other examples, the first wireless communication device may be a UE (or user terminal) and the second wireless communication device may be a base station. In other examples, the first wireless communication device may be a UE (or user terminal) and the second wireless communication device may be another UE (or another user terminal). In some implementations, such as when the first wireless communication device is a base station (e.g., a gNB), the testing system and the first wireless communication device may both be included in a network, such as a RAN or the network 350 described in more detail in connection with Fig. 3. In some implementations, the testing system may be a component of a wireless communication device, such as a base station. In some implementations, the testing system may be a component of a network device, such as a network controller or another control entity.

As shown in Fig. 2, the first wireless communication device may include an AI/NΠ, model (e.g., an embedded AI/ML model), in a similar manner as described elsewhere herein. For example, the AI/ML model may be configured to obtain an input (e.g., data) from a model management component and generate an output (e.g., an inference) using the input. The AI/ML model may provide the output to a model monitoring component of the first wireless communication device. In some implementations, the second wireless communication device may include an embedded AI/ML model in a similar manner. For example, the AI/ML model may be a two-sided model where a first portion of the AI/ML model is embedded at the first wireless communication device and a second portion of the AI/ML model is embedded at the second wireless communication device. For example, the AI/ML model of the first wireless communication device and the AI/ML model of the second wireless communication device may exchange information via an encoded bitstream (e.g., via a logical link between the AI/ML models).

In some implementations, the first wireless communication device and the second wireless communication device may support model transfer capabilities, in a similar manner as described elsewhere herein. In some other implementations, the first wireless communication device and the second wireless communication device may not support model transfer capabilities. In some implementations, the second wireless communication device may not include an AI/ML model.

In some other implementations, the first wireless communication device may not include the AI/ML model and only the second wireless communication device may include the AI/ML model. In such examples, the testing system may communicate or interact with the first wireless communication device to obtain information associated with the AI/ML model at the second wireless communication device. The testing system may cause the first wireless communication device to switch or load different AI/ML models at the second wireless communication device (e.g., where the first wireless communication device is a base station and the second wireless communication device is a UE).

As shown in Fig. 2, the testing system may include a testing component. The testing component may also be interchangeably referred to as a testing device herein. The testing component may include a test model (e.g., an AI/ML model), in a similar manner as described elsewhere herein. For example, the test model may be an AI/ML model that is embedded at the testing system. The test model may be trained to be a benchmark model or a reference model (e.g., a single reference source) for the evaluation and verification of AI/ML models for the air interface, such as the AI/ML models of the first wireless communication device and/or the second wireless communication device. For example, the test model may be a single reference source for AI/ML models supplied by different vendors and/or for AI/ML models deployed in field scenarios. The testing system may include a model management component that may be configured to aid or facilitate the switching and loading of new AI/ML models or operation modes to improve accuracy and performance of wireless communication devices. The testing system may include a model storage configured to store different AI/ML models and/or information for testing, evaluating, and/or validating AI/ML models for the air interface.

For example, as shown in Fig. 2 and by reference number 205, the model monitoring component of the first wireless communication device may be configured to provide one or more output parameters to the testing component of the testing system. For example, the first wireless communication device may provide the output parameters via a logical link between the first wireless communication device and the testing system. The one or more output parameters may be one or more metrics for performance monitoring of the AI/ML model of the first wireless communication device. The first wireless communication device may provide the one or more output parameters in a similar manner as described elsewhere herein, such as in connection with Figs. 1A and 1B and/or reference number 120.

The testing component may be configured to determine one or more performance parameters of the AI/ML model (e.g., via the test model), in a similar manner as described in more detail elsewhere herein. For example, the one or more performance parameters may indicate a performance level, an accuracy, and/or a verification of one or more functions of the AI/ML model (e.g., using the test model as a single reference source for the evaluation and/or verification). As shown by reference number 210, the testing system may output an indication of the one or more performance parameters, such as to a network operator device or another network device. Additionally, or alternatively, the testing component may provide the one or more performance parameters to the model management component.

The testing system (e.g., via the model management component) may evaluate the performance of the AI/ML model using the performance parameter(s), in a similar manner as described elsewhere herein. As shown by reference number 215 and reference number 220, the testing system (e.g., via the model management component) may provide one or more control commands to the first wireless communication device (e.g., to the model management component of the first wireless communication device as shown by reference number 215 and/or to the model monitoring component as shown by reference number 220). The one or more control commands may cause the first wireless communication device to switch from using a first AI/ML model to using a second AI/ML model (e.g., based on the testing system determining that the first AI/ML model is experiencing poor performance). As another example, the one or more control commands may cause the first wireless communication device to switch an operation mode of the AI/ML model. Additionally, or alternatively, the one or more control commands may cause the first wireless communication device to initiate a model transfer with the second wireless communication device (e.g., to transfer an AI/ML model to the second wireless communication device or obtain an AI/ML model from the second wireless communication device). The control command(s) may be similar to the feedback information described in connection with reference number 135. As shown by reference number 225, the first wireless communication device may transmit, and the testing system may receive, command feedback (e.g., indicating whether a command indicated by the control command(s) has been accepted and/or successfully applied).

As shown by reference number 230, the testing system may obtain an operator command (e.g., from a network operator device, not shown in Fig. 2). In some implementations, the operator command may indicate an AI/ML model to be used by the first wireless communication device and/or the second wireless communication device. For example, an override control may exist to allow a network operator to force the use of a particular AI/ML model (e.g., in a live deployment and/or for the purposes of testing). For example, based on the operator command indicating that a given AI/ML model is to be used, a control command transmitted by the testing system may indicate that the given AI/ML model is to be used by the first wireless communication device and/or the second wireless communication device.

Additionally, or alternatively, the operator command may indicate one or more testing scenarios (e.g., active testing scenarios). In such example, the testing system may be configured to generate test data and/or active testing scenarios to be applied to a test of the AI/ML model embedded at the first wireless communication device.

As a result, the testing system may be enabled to provide AI/ML model management, performance monitoring, and/or data collection of embedded AI/ML models in deployed wireless communication devices. The testing system may facilitate the loading and/or switching of AI/ML models (or operation modes of a given AI/ML model) used by one or more wireless communication devices using the determined performance parameters (e.g., using the evaluation and/or verification performed by the testing system).

As indicated above, Fig. 2 is provided as an example. Other examples may differ from what is described with regard to Fig. 2. The number and arrangement of devices shown in Fig. 2 are provided as an example. In practice, there may be additional devices, fewer devices, different devices, or differently arranged devices than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) shown in Fig. 2 may perform one or more functions described as being performed by another set of devices shown in Fig. 2.

Fig. 3 is a diagram of an example environment 300 in which systems and/or methods described herein may be implemented. As shown in Fig. 3, environment 300 may include a testing system 310, a first wireless communication device 320, a second wireless communication device 330, and a network 350. Devices of environment 300 may interconnect via wired connections, wireless connections, or a combination of wired and wireless connections.

Testing system 310 includes one or more devices capable of communicating with the first wireless communication device 320, the second wireless communication device 330, and/or a network (e.g., network 350), such as to perform processing of information produced by an AI/ML model embedded at the first wireless communication device 320. The testing system 310 may communicate with the first wireless communication device 320 by a wired connection, as described elsewhere herein. In some implementations, the testing system 310 may wirelessly communicate with the first wireless communication device 320. In some implementations, the testing system 310 (or a component of the testing system 310) may be a component of the first wireless communication device 320 (e.g., may be included in the first wireless communication device 320).

The testing system 310 may include a beamforming network, a feedback component, and/or a testing component (e.g., a testing device), as described elsewhere herein. The testing component may include one or more devices capable of receiving, generating, storing, processing, and/or providing information associated with an AI/ML model, such as an embedded AI/ML model for the air interface (e.g., embedded at the first wireless communication device 320 and/or the second wireless communication device 330). For example, the testing component (e.g., the testing device) may include a communication and/or computing device, such as a mobile phone (e.g., a smart phone, a radiotelephone, etc.), a laptop computer, a tablet computer, a handheld computer, a desktop computer, a gaming device, a wearable communication device (e.g., a smart wristwatch, a pair of smart eyeglasses, etc.), or a similar type of device. In some implementations, the testing component may include a test model, such as an embedded AI/ML model that is trained to serve as a benchmark or single source of reference for embedded AI/ML models for the air interface.

The first wireless communication device 320 includes one or more devices capable of communicating with another wireless communication device using a cellular radio access technology (RAT). For example, the first wireless communication device 320 may include a base transceiver station, a radio base station, a node B, an evolved node B (eNB), a gNB, a base station subsystem, a cellular site, a cellular tower (e.g., a cell phone tower or a mobile phone tower), an access point, a transmit receive point (TRP), a radio access node, a macrocell base station, a microcell base station, a picocell base station, a femtocell base station, a satellite (e.g., a satellite eNB or a satellite gNB), a non-terrestrial network device, or a similar type of device. The first wireless communication device 320 may transfer traffic between a UE (e.g., using a cellular RAT), a base station (e.g., using a wireless interface or a backhaul interface, such as a wired backhaul interface), and/or network 350. The first wireless communication device 320 may provide one or more cells that cover geographic areas. The first wireless communication device may be a mobile device. The first wireless communication device 320 may be capable of communicating using multiple RATs.

In some implementations, the first wireless communication device 320 may perform scheduling and/or resource management for UEs covered by first wireless communication device 320 (e.g., UEs covered by a cell provided by first wireless communication device 320). In some implementations, the first wireless communication device 320 may be controlled or coordinated by a network controller, which may perform load balancing and/or network-level configuration. The network controller may communicate with the first wireless communication device 320 via a wireless or wireline backhaul. In some implementations, the first wireless communication device 320 may include a network controller, a self-organizing network (SON) module or component, or a similar module or component. In other words, the first wireless communication device 320 may perform network control, scheduling, and/or network management functions (e.g., for a base station and/or for uplink, downlink, and/or sidelink communications of UEs covered by the first wireless communication device 320). In some implementations, the first wireless communication device 320 may include a central unit and multiple distributed units. The central unit may coordinate access control and communication with regard to the multiple distributed units. The multiple distributed units may provide UEs and/or a base station with access to the network 350.

The second wireless communication device 330 may include one or more devices capable of communicating with the first wireless communication device 320 and/or a network (e.g., network 350). For example, the second wireless communication device 330 may include a wireless communication device, a radiotelephone, a personal communications system (PCS) terminal (e.g., that may combine a cellular radiotelephone with data processing and data communications capabilities), a smart phone, a laptop computer, a tablet computer, a personal gaming system, user equipment, and/or a similar device. The second wireless communication device 330 may be capable of communicating using uplink (e.g., UE to base station) communications, downlink (e.g., base station to UE) communications, and/or sidelink (e.g., UE-to-UE) communications. In some implementations, the second wireless communication device 330 may include a machine-type communication (MTC) UE, such as an evolved or enhanced MTC (eMTC) UE. In some implementations, the second wireless communication device 330 may include an Internet of Things (IoT) UE, such as a narrowband IoT (NB-IoT) UE.

In some implementations, the first wireless communication device 320 may be a base station and the second wireless communication device 330 may be a UE. In other examples, the first wireless communication device 320 may be a UE and the second wireless communication device 330 may be a base station. In other examples, the first wireless communication device 320 may be a base station and the second wireless communication device 330 may be another base station or a network node. In other examples, the first wireless communication device 320 may be a UE and the second wireless communication device 330 may be another UE.

The network operator device 340 may include one or more devices capable of receiving, generating, storing, processing, providing, and/or routing information associated with active testing for air-interface-based AI/ML models, as described elsewhere herein. The network operator device 340 may include a communication device and/or a computing device. For example, the network operator device 340 may include a server, such as an application server, a client server, a web server, a database server, a host server, a proxy server, a virtual server (e.g., executing on computing hardware), or a server in a cloud computing system. In some implementations, the network operator device 340 may include computing hardware used in a cloud computing environment.

The network 350 includes one or more wired and/or wireless networks. For example, network 350 may include a cellular network (e.g., a long-term evolution (LTE) network, a code division multiple access (CDMA) network, a 3G network, a 4G network, a 5G network, or another type of next generation network), a terrestrial network, a non-terrestral network (NTN) (e.g., including one or more satellites and/or high-altitude platforms (HAPs), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, and/or a combination of these or other types of networks.

The quantity and arrangement of devices and networks shown in Fig. 3 are provided as one or more examples. In practice, there may be additional devices and/or networks, fewer devices and/or networks, different devices and/or networks, or differently arranged devices and/or networks than those shown in Fig. 3. Furthermore, two or more devices shown in Fig. 3 may be implemented within a single device, or a single device shown in Fig. 3 may be implemented as multiple, distributed devices. Additionally, or alternatively, a set of devices (e.g., one or more devices) of environment 300 may perform one or more functions described as being performed by another set of devices of environment 300.

Fig. 4 is a diagram of example components of a device 400 associated with active testing for air-interface-based AI/ML models. The device 400 may correspond to the testing system 310 (e.g., a testing device included in the testing system), the first wireless communication device 320, and/or the second wireless communication device 330. In some implementations, the testing system 310 (e.g., a testing device included in the testing system), the first wireless communication device 320, and/or the second wireless communication device 330 may include one or more devices 400 and/or one or more components of the device 400. As shown in Fig. 4, the device 400 may include a bus 410, a processor 420, a memory 430, an input component 440, an output component 450, and/or a communication component 460.

The bus 410 may include one or more components that enable wired and/or wireless communication among the components of the device 400. The bus 410 may couple together two or more components of Fig. 4, such as via operative coupling, communicative coupling, electronic coupling, and/or electric coupling. For example, the bus 410 may include an electrical connection (e.g., a wire, a trace, and/or a lead) and/or a wireless bus. The processor 420 may include a central processing unit, a graphics processing unit, a microprocessor, a controller, a microcontroller, a digital signal processor, a field-programmable gate array, an application-specific integrated circuit, and/or another type of processing component. The processor 420 may be implemented in hardware, firmware, or a combination of hardware and software. In some implementations, the processor 420 may include one or more processors capable of being programmed to perform one or more operations or processes described elsewhere herein.

The memory 430 may include volatile and/or nonvolatile memory. For example, the memory 430 may include random access memory (RAM), read only memory (ROM), a hard disk drive, and/or another type of memory (e.g., a flash memory, a magnetic memory, and/or an optical memory). The memory 430 may include internal memory (e.g., RAM, ROM, or a hard disk drive) and/or removable memory (e.g., removable via a universal serial bus connection). The memory 430 may be a non-transitory computer-readable medium. The memory 430 may store information, one or more instructions, and/or software (e.g., one or more software applications) related to the operation of the device 400. In some implementations, the memory 430 may include one or more memories that are coupled (e.g., communicatively coupled) to one or more processors (e.g., processor 420), such as via the bus 410. Communicative coupling between a processor 420 and a memory 430 may enable the processor 420 to read and/or process information stored in the memory 430 and/or to store information in the memory 430.

The input component 440 may enable the device 400 to receive input, such as user input and/or sensed input. For example, the input component 440 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 450 may enable the device 400 to provide output, such as via a display, a speaker, and/or a light-emitting diode. The communication component 460 may enable the device 400 to communicate with other devices via a wired connection and/or a wireless connection. For example, the communication component 460 may include a receiver, a transmitter, a transceiver, a modem, a network interface card, and/or an antenna.

The device 400 may perform one or more operations or processes described herein. For example, a non-transitory computer-readable medium (e.g., memory 430) may store a set of instructions (e.g., one or more instructions or code) for execution by the processor 420. The processor 420 may execute the set of instructions to perform one or more operations or processes described herein. In some implementations, execution of the set of instructions, by one or more processors 420, causes the one or more processors 420 and/or the device 400 to perform one or more operations or processes described herein. In some implementations, hardwired circuitry may be used instead of or in combination with the instructions to perform one or more operations or processes described herein. Additionally, or alternatively, the processor 420 may be configured to perform one or more operations or processes described herein. Thus, implementations described herein are not limited to any specific combination of hardware circuitry and software.

The number and arrangement of components shown in Fig. 4 are provided as an example. The device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

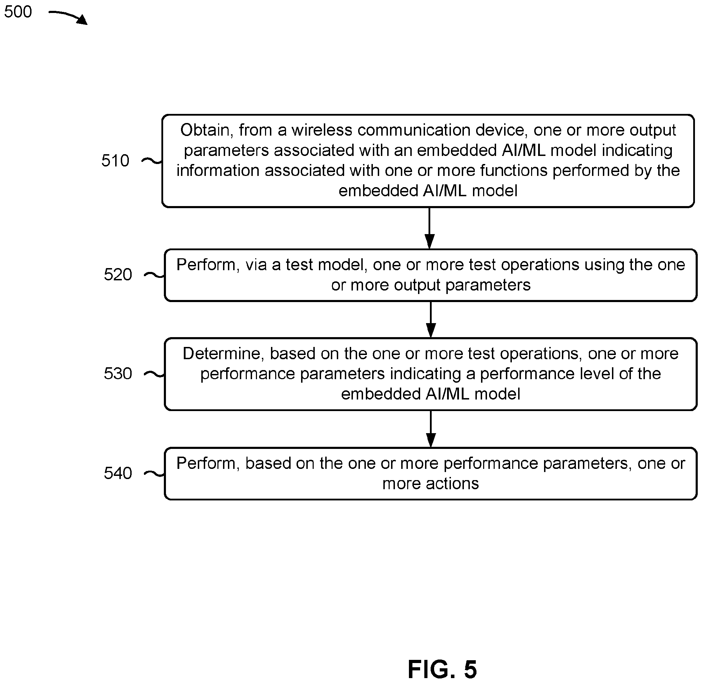

Fig. 5 is a flowchart of an example process 500 associated with active testing for air-interface-based AI/ML models. In some implementations, one or more process blocks of Fig. 5 are performed by a testing system (e.g., testing system 310). In some implementations, one or more process blocks of Fig. 5 are performed by another device or a group of devices separate from or including the testing system, such as a wireless communication device (e.g., the first wireless communication device 320 and/or the second wireless communication device 330). Additionally, or alternatively, one or more process blocks of Fig. 5 may be performed by one or more components of device 400, such as processor 420, memory 430, input component 440, output component 450, and/or communication component 460.

As shown in Fig. 5, process 500 may include obtaining, from a wireless communication device, one or more output parameters associated with an embedded AI/ML model indicating information associated with one or more functions performed by the embedded AI/ML model (block 510). For example, the testing system may obtain, from a wireless communication device, one or more output parameters associated with an embedded AI/ML model indicating information associated with one or more functions performed by the embedded AI/ML model, as described above. In some implementations, the embedded AI/ML model is embedded at the wireless communication device. In some implementations, the one or more functions are associated with an air interface (e.g., over-the-air interface) over which the wireless communication device is configured to communicate.

As further shown in Fig. 5, process 500 may include performing, via a test model of the testing system, one or more test operations using the one or more output parameters (block 520). For example, the testing system may perform, via a test model of the testing system, one or more test operations using the one or more output parameters, as described above. In some implementations, the test model is a reference model for the one or more test operations. In some implementations, the test model includes a separately trained embedded AI/ML model.

As further shown in Fig. 5, process 500 may include determining, based on the one or more test operations, one or more performance parameters indicating a performance level of the embedded AI/ML model (block 530). For example, the testing system may determine, based on the one or more test operations, one or more performance parameters indicating a performance level of the embedded AI/ML model, as described above.

As further shown in Fig. 5, process 500 may include performing, based on the one or more performance parameters, one or more actions (block 540). For example, the testing system may perform, based on the one or more performance parameters, one or more actions, as described above.

Process 500 may include additional implementations, such as any single implementation or any combination of implementations described below and/or in connection with one or more other processes described elsewhere herein.

In a first implementation, the test model is trained to facilitate the one or more functions associated with the air interface by simulating one or more network events.

In a second implementation, alone or in combination with the first implementation, the one or more output parameters are associated with a plurality of operation modes of the embedded AI/ML model, and performing the one or more actions comprises selecting an active operation mode from the plurality of operation modes based on the one or more performance parameters indicating that the active operation mode is associated with a highest performance level, and transmitting, to the wireless communication device, an indication to use the active operation mode.

In a third implementation, alone or in combination with one or more of the first and second implementations, obtaining the one or more output parameters comprises obtaining at least one output parameter, of the one or more output parameters, associated with an operation mode, of the plurality of operation modes, based on the air interface being associated with one or more radio conditions that are indicative of an operational scenario that is associated with the operation mode.

In a fourth implementation, alone or in combination with one or more of the first through third implementations, the plurality of operation modes include a main operation mode and one or more alternate operation modes, wherein the performance level is associated with the main operation mode, and wherein performing the one or more actions comprises causing the wireless communication device to switch between the main operation mode and an alternate operation mode of the one or more alternate operation modes based on the one or more performance parameters indicating that the performance level does not meet one or more criteria.

In a fifth implementation, alone or in combination with one or more of the first through fourth implementations, process 500 includes maintaining a counter indicating a quantity of instances of the wireless communication device switching between the main operation mode and the one or more alternate operation modes, wherein the quantity of instances is included in the one or more performance parameters.

In a sixth implementation, alone or in combination with one or more of the first through fifth implementations, determining the one or more performance parameters comprises determining performance differences between the main operation mode and respective alternate operation modes of the one or more alternate operation modes.

In a seventh implementation, alone or in combination with one or more of the first through sixth implementations, performing the one or more actions comprises transmitting, to a network operator device, an indication of the one or more performance parameters.

Although Fig. 5 shows example blocks of process 500, in some implementations, process 500 includes additional blocks, fewer blocks, different blocks, or differently arranged blocks than those depicted in Fig. 5. Additionally, or alternatively, two or more of the blocks of process 500 may be performed in parallel.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein. In some implementations, the operation and behavior of the systems and/or methods described herein may be performed via one or more virtualization systems (e.g., a system that enables the creation of virtual instances or environments that mimic the behavior of physical hardware or software).

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiple of the same item.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors configured to: perform X; perform Y; and perform Z," that claim should be interpreted to mean "one or more processors configured to perform X; one or more (possibly different) processors configured to perform Y; and one or more (also possibly different) processors configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

## Claims

1. A testing system, comprising:
a test model that includes a first embedded artificial intelligence or machine learning (AI/ML) model that is trained to evaluate performance of other embedded AI/ML models in connection with one or more network events; and
a testing component, configured to:
obtain, from a wireless communication device, one or more output parameters associated with a second embedded AI/ML model indicating information associated with one or more functions performed by the second embedded AI/ML model,
wherein the second embedded AI/ML model is embedded at the wireless communication device, and
wherein the one or more functions are associated with an air interface over which the wireless communication device is configured to communicate;
perform, via the test model, one or more test operations using the one or more output parameters,
wherein the first embedded AI/ML model is a reference model for the one or more test operations;
determine, based on the one or more test operations, one or more performance parameters indicating a performance level of the second embedded AI/ML model; and
perform, based on the one or more performance parameters, one or more actions.

2. The testing system of claim 1, wherein the first embedded AI/MI, model is trained to facilitate the one or more functions associated with the air interface by simulating the one or more network events.

3. The testing system of claim 1 or claim 2, wherein the testing component, to perform the one or more test operations, is configured to:
generate, using the one or more output parameters, evaluation data for one or more active testing scenarios;
provide, as an input to the test model, the evaluation data; and
obtain, via an output of the test model, one or more reference parameters indicating an expected behavior in the one or more active testing scenarios,
wherein the one or more performance parameters are based on a comparison of the one or more reference parameters to the one or more output parameters.

4. The testing system of any one of the preceding claims, wherein the testing component is further configured to:
transmit, to the wireless communication device, test data for one or more active testing scenarios,
wherein the testing component, to obtain the one or more output parameters, is configured to:
obtain the one or more output parameters based on transmitting the test data.

5. The testing system of any one of the preceding claims, wherein the testing component, to perform the one or more actions, is configured to either:
cause the wireless communication device to switch from the second embedded AI/NΠ, model to a third embedded AI/NΠ, model that is trained to perform the one or more functions: or
cause the wireless communication device to modify one or more parameters of the second embedded AI/NΠ, model.

6. The testing system of any one of the preceding claims, wherein the second embedded AI/ML model is a channel state information (CSI) compression model that is trained to compress CSI, and wherein the testing component, to perform the one or more actions, is configured to:
transmit, to the wireless communication device, an indication to modify a compression level of the CSI compression model.

7. A method for active testing for air-interface-based embedded artificial intelligence or machine learning (AI/ML) models, comprising:
obtaining, by a testing system and from a wireless communication device, one or more output parameters associated with an embedded AI/NΠ, model indicating information associated with one or more functions performed by the embedded AI/NΠ, model,
wherein the embedded AI/ML model is embedded at the wireless communication device, and
wherein the one or more functions are associated with an air interface over which the wireless communication device is configured to communicate;
performing, by the testing system and via a test model of the testing system, one or more test operations using the one or more output parameters,
wherein the test model is a reference model for the one or more test operations;
determining, by the testing system and using the one or more test operations, one or more performance parameters indicating a performance level of the embedded AI/NΠ, model; and
performing, by the testing system and based on the one or more performance parameters, one or more actions.

8. The method of claim 7, wherein the test model is trained to facilitate the one or more functions associated with the air interface by simulating or recreating one or more network events.

9. The method of claim 7 or claim 8, wherein the one or more output parameters are associated with a plurality of operation modes of the embedded AI/MI, model, and wherein performing the one or more actions comprises:
selecting an active operation mode from the plurality of operation modes using the one or more performance parameters indicating that the active operation mode is associated with a highest performance level; and
transmitting, to the wireless communication device, an indication to use the active operation mode.

10. The method of claim 9, wherein either obtaining the one or more output parameters comprises obtaining at least one output parameter, of the one or more output parameters, associated with an operation mode, of the plurality of operation modes, based on the air interface being associated with one or more radio conditions that are indicative of an operational scenario that is associated with the operation mode: or
wherein the plurality of operation modes include a main operation mode and one or more alternate operation modes, wherein the performance level is associated with the main operation mode, and wherein performing the one or more actions comprises:
causing the wireless communication device to switch between the main operation mode and an alternate operation mode of the one or more alternate operation modes using the one or more performance parameters indicating that the performance level does not meet one or more criteria.

11. The method of claim 10, further comprising either:
maintaining a counter indicating a quantity of instances of the wireless communication device switching between the main operation mode and the one or more alternate operation modes,
wherein the quantity of instances is included in the one or more performance parameters: or
wherein determining the one or more performance parameters comprises determining performance differences between the main operation mode and respective alternate operation modes of the one or more alternate operation modes.

12. The method of claim 7, wherein performing the one or more actions comprises:
transmitting, to a network operator device, an indication of the one or more performance parameters.

13. A testing device, comprising:
one or more processors configured to:
obtain, from a wireless communication device, one or more output parameters associated with an embedded artificial intelligence or machine learning (AI/ML) model indicating information associated with one or more functions performed by the embedded AI/ML model,
wherein the embedded AI/ML model is embedded at the wireless communication device, and
wherein the one or more functions are associated with an air interface over which the wireless communication device is configured to communicate;
perform, via a test model embedded at the testing device, one or more test operations using the one or more output parameters,
wherein the test model is a ground truth model for the one or more test operations;
determine, using the one or more test operations, one or more performance parameters indicating a performance level of the embedded AI/ML model; and
perform, based on the one or more performance parameters, one or more actions.

14. The testing device of claim 13, wherein the one or more processors, to perform the one or more actions, are configured to either:
perform the one or more actions via a network management plane interface: or
generate, using the one or more output parameters, evaluation data for one or more active testing scenarios;
provide, as an input to the test model, the evaluation data; and
obtain, via an output of the test model, one or more reference parameters indicating an expected behavior in the one or more active testing scenarios,
wherein the one or more performance parameters are based on a comparison of the one or more reference parameters to the one or more output parameters: or
cause the wireless communication device to switch from the embedded AI/ML model to another embedded AI/NΠ, model that is trained to perform the one or more functions.

15. The testing device of claim 13, wherein the one or more processors are further configured to:
transmit, to the wireless communication device, test data for one or more active testing scenarios,
wherein the one or more processors, to obtain the one or more output parameters, are configured to:
obtain the one or more output parameters based on transmitting the test data.
